# EUROPEAN PATENT APPLICATION

(11) **EP 3 018 605 A1**
(43) Date of publication of application: **11.05.2016**
(21) Application number: 14191694.0
(22) Date of filing: 04.11.2014
(51) Int. Cl.: G06F 21/12, G06F 21/78

(54) **Method to operate a wireless communication unit**

(71) Applicant: Gemalto M2M GmbH, 81541 München (DE)
(72) Inventor: Lampart, Thomas, 13585 Berlin (DE)
(74) Representative: Grevin, Emmanuel

(57) **Abstract**

The present invention relates to a method to operate a wireless communication unit, the wireless communication unit being configured to operate within a wireless network, the wireless communication unit comprising a runtime engine, an external interface, a first memory unit and a second memory unit, the second memory unit being restricted from external access, the method comprising the steps of:
- receiving at the wireless communication unit an encrypted software element from an external appliance connected through the external interface,
- after receiving the encrypted software element, storing the encrypted software element to the first memory unit,
- installing the encrypted software element from first memory unit to second memory unit, the step of installing comprises:
- decrypting the encrypted software element, and
- storing the decrypted software element to second memory unit,
the method further comprising the step:
- running installed software element from second memory unit by means of the runtime engine.

## Description

### FIELD OF THE INVENTION

The present invention relates to a method to operate a wireless communication unit.

The invention also pertains to a wireless communication unit using said method and a system comprising said wireless communication unit.

### BACKGROUND OF THE INVENTION

Generally, in the area of wireless communication it is known that wireless communication units may comprise a runtime engine capable of executing software elements loaded by external appliances. Such wireless communication units are in particular machine-to-machine (M2M) modules, which are connected to the external appliances, like metering devices, car entertainment units, tracking & tracing units or the like. The devices are dedicated to communicate with remote devices via wireless in particular cellular networks. Such software elements are in particular Java applications resp. libraries in the form of JAR-files or comparable object code archives of other programming languages, but also script files.

When such a software element is about to be stored in the wireless communication unit or the external appliances in a format ready to be executed, it is for an unauthorized party, like an intruder, easy to get access to the software element during the installation process. With that the intruder can by way of recompilation or other known analysis tools get access to the content of the source code or other resources of the software element. This is in particular disadvantageous in case the software element comprises access credentials e.g. for remote servers, databases etc., but also to keep company secrets in terms of special algorithms etc. or other intellectual properties. Further the authors of such software elements might be interested in only a limited distribution of their software, in particular only to a limited number of dedicated devices envisaged by the author or distributor. Hence there is a need to avoid an unauthorized copying of such software elements from the wireless communication unit.

There is therefore a need for a protection of the software elements which provides means for securing access to the software elements, but without the overhead of large authorization environments, like known in the art. It is moreover desirable to create such a software protection regardless for the way how the software element reaches the wireless communication unit.

Further alternative and advantageous solutions would, accordingly, be desirable in the art.

### SUMMARY OF THE INVENTION

The present invention proposes according to a first aspect a method to operate a wireless communication unit according to claim 1. It is further suggested according to a second aspect of the invention a wireless communication unit according to claim 9. In a third aspect of the invention it is suggested a system according to claim 15.

According to a first aspect of the invention it is proposed a method to operate a wireless communication unit, the wireless communication unit being configured to operate within a wireless network, the wireless communication unit comprising a runtime engine, an external interface, a first memory unit and a second memory unit, the second memory unit being restricted from external access, the method comprising the steps of:
- receiving at the wireless communication unit an encrypted software element from an external appliance connected through the external interface,
- after receiving the encrypted software element, storing the encrypted software element to the first memory unit,
- installing the encrypted software element from first memory unit to second memory unit, the step of installing comprises:
- decrypting the encrypted software element, and
- storing the decrypted software element to second memory unit,
   the method further comprising the step:
- running installed software element from second memory unit by means of the runtime engine.

The proposed invention approaches the addressed problem by receiving the software element in encrypted form at the wireless communication unit through the external appliance. The external appliance and the wireless communication unit together form a wireless communication device, like set out above. The software element is in particular a software library, in particular executable, which comprises all elements for being installed and run within the wireless communication unit. The wireless communication unit is for that equipped with a runtime engine configured to execute the software element, in particular after installation. Said software element is preferably foreseen to control the behavior of the wireless communication unit in particular with respect to wireless communication via a wireless network to other devices or remote servers. As such it is capable to relieve the external appliance from control tasks and as such frees operating resources of the external appliance.

The wireless communication unit is equipped with at least two memory units, a first and a second one. Those memory units are in particular situated on separate physical flash memory chips. Alternatively they form separate areas on the same physical memory. The external appliance is configured to provide to the wireless communication unit the encrypted software element that way that it is stored in the first memory unit. Preferably the control unit of the wireless communication unit, respectively the parts thereof responsible for management of memory unit, retrieves through the external interface the software element and stores it in the first memory unit.

It is advantageous that the inventive method is applicable to any means how the external appliance retrieves the software element. This comprises in particular a physical memory locally connected to the external appliance, like a USB storage device or flash memory card. It further comprises the retrieval through a wireless connection, in particular established by means of the wireless communication unit. For the wireless communication unit the content of data retrieved on behalf of the external appliance is fully transparent, it is therefore fully received at the external appliance and then provided again to the wireless communication unit through the external interface. Alternatively the software element is retrieved through another wired or wireless connection to a remote server, wherein the connection is established by a communication unit different from the wireless communication unit. The retrieval from remote servers in particular comprises downloading by means of an email or more elaborate mechanisms like device management systems like OMA-DM.

All means of retrieval have in common that the software element is retrieved in encrypted form.

The second memory unit is fully restricted from external access, this in particular means that it is not even visible from the outside, hence it constitutes a hidden memory. Such second memory unit is in particular used for certificates and other sensitive data. In a preferred embodiment it is foreseen that access to second memory unit is restricted to units internal to the wireless communication unit.

Such memory is in particular in Java ME (mobile edition) a secure storage completely hidden to outside units, and only accessible by the Java ME application manager. According to that it is in particular proposed a method where the wireless communication unit further comprising at least one control unit, wherein the second memory unit is only accessible for the control unit and the runtime engine.

Therefore the runtime engine is in said context of Java ME implemented as Java ME application manager. The control unit has at least access to the second memory unit in order to be able to install the software element to the second memory unit. It is further foreseen that the control unit and the runtime engine are situated within one component of the wireless communication unit.

After the external appliance provided the encrypted software element through the external interface to the wireless communication unit, and it is stored in the first memory unit, then the installation step is carried out by the wireless communication unit. It is advantageous that the installation is carried out with a certain time gap since the retrieval from the external appliance. As such it is foreseen to asynchronously retrieve and install the software elements, in particular depending on the activity of the affected external appliance and wireless communication unit.

The installation comprises at least two steps, the first one is the decryption and the second one is the storing of the decrypted software element in the second memory unit. For the decryption step the wireless communication unit, in particular the control unit makes use of a decryption key available in the wireless communication unit. For this it is recommended to store the decryption key in the second memory unit. As all end-to-end encryption is only useful, if the decryption key is handled as a secret, that is access to devices outside the wireless communication unit is prevented, it is advantageous to provide such a hidden second memory unit. Preferably it is this hidden second memory unit which is also used for installing the software element.

The storing is eventually executed after the decryption step. It is in a first embodiment foreseen to first completely decrypt, hold the decrypted software element in volatile memory and store it from there completely in the second memory unit. Alternatively the software element is decrypted in parts, each decrypted part is stored in the second memory unit, and then it is continued with the next part. This is in particular advantageous for large software element, in particular those consisting of a multitude of files and/or folders. It is in particular advantageous to store the decrypted parts to the second memory unit, and then perform further installation steps within the second memory unit, e.g. configuration steps, moving of certain parts of the software element to certain folders, registering at the runtime engine, adapting configuration files etc. Preferably all said steps related to the installation are controlled by the control unit of the wireless communication unit.

Once the software element is completely installed in the second memory unit, then it is ready to be started from there by means of the runtime engine.

If it is only the runtime engine having access to the second memory unit, in particular in the case of the Java ME application manager, then at least the storing step in the second memory unit, but preferably also the decryption step is carried out by the runtime engine, respectively the Java ME application manager.

The inventive approach furthermore allows a parallel installation of software elements with high security requirement following the inventive method and of those with reduced security requirements, where a simple unencrypted reception and storage on one of the memory units being part of the wireless communication unit is sufficient.

As it is shown the inventive method is in particular advantageous for remotely downloaded software elements, in order to provide a real end-to-end security. For that it is further suggested a method wherein the external appliance comprises a third memory unit, the method comprising the steps for the external appliance:
- downloading encrypted software element from external server by means of wireless communication unit,
- storing downloaded encrypted software element to third memory unit,
- providing encrypted software element to wireless communication unit by means of external interface of the wireless communication unit.

This embodiment comprises one preferred way of providing the wireless communication unit with software elements from the outside, that is from remote servers. Such remote servers in particular provide software shops, like app shops, or any other sites, providing software elements for the wireless communication unit.

It is further preferred that the first memory unit is secured from read access of external appliances through the external interface. This is advantageous in order not to compromise the consistency of the wireless communication unit as such. The securing of the first memory unit in particular relates to executable files and/or packages like software elements and is controlled by the control unit of the wireless communication unit, in particular the parts thereof responsible for management of memory unit.

According to another preferred embodiment it is suggested a method wherein the wireless communication unit further comprising a secured operation unit comprising memory means for storing a decryption key.

This advantageous embodiment provides a secured operation unit which allows storing the decryption key. A secured operation unit is characterized by comprising a secured memory unit and an access interface, and preferably a control unit for executing software applications stored in the secured operation unit. The secured operation unit is in particular a unit which is detachable connected to the wireless communication unit. A preferred embodiment of such a secured operation unit is a universal integrated circuit card (UICC) or a secure element (SE), whereby a UICC can also comprise a secure element as secured memory unit.

In present embodiment the decryption key is stored in the secured memory unit of the secured operation unit.

In a further preferred embodiment it is proposed that wherein the step of decrypting is executed by means of the secured operation unit with the stored decryption key.

The decryption of an encrypted file, in particular a software element or a part thereof, is with the secured operation unit done preferably by providing the encrypted file to the secured operation unit and receiving the decrypted file in return. This assures that the decryption key will not be provided outside of the secured operation unit. Preferably this is done on behalf of the control unit that means the control unit retrieves the encrypted software element from the first memory unit and provides it to the secured operation unit and receives the decrypted software element in order to store it in the second memory unit.

This embodiment is in particular advantageous as the decryption key does not need to be stored in the wireless communication unit during manufacturing, or through other means, which are prone of fraud activities. If the decryption key needed to be provided during manufacturing to the wireless communication unit, then this is only usable for a special external appliance manufacturer who provides the wireless communication unit manufacturer with the desired decryption key. It is obvious that there is a lot of organizational overhead to get this process up and running, which in the end might prevent customer from using such security means at all. For that, this embodiment is the more flexible approach. In particular it allows providing UICCs for a special device manufacturer. Hence all devices of this manufacturer which are equipped with such configured UICC would then be enabled to install software elements encrypted by the device manufacturer with the corresponding encryption key.

According to another preferred embodiment it is proposed that the second memory unit is comprised in said secured operation unit, and the step of storing the decrypted software element is executed by said secured operation unit.

In this embodiment it is additionally foreseen that the secured operation unit not only decrypts the software element retrieved from the control unit, but also stores the decrypted software element to its secured memory unit. With that the second memory unit is part of the secured operation unit. The only precondition for this embodiment is that the runtime engine has access to the stored decrypted software element. This is in particular implemented by means of access policies, and moreover preferably provides an indirect access via the control unit.

According to another advantageous embodiment it is further proposed that the software element is encrypted with a public key different from the decryption key. This embodiment relates to the concept of asymmetric encryption, which provides a pair of keys, one for encryption and one for decryption. One of the keys is the private key, the other the public key. The decryption key is in present embodiment thus the private key of the pair of keys, while the software element was encrypted with the public key.

This is advantageous as the public key is not a secret and can be provided to a multitude of software developers who create software elements. Preferably the public key is provided with software development kits (SDKs) from the wireless communication unit manufacturer. The results of the software developers can freely be retrieved, in particular downloaded to the wireless communication device and installed on the wireless communication unit, including the decryption step with the private key. Thus, the private key is only used at manufacturing time, or alternatively with the secured operation unit and kept secret. The storage in a hidden memory - be it the secured memory unit of the secured operation unit, or another type of hidden second memory unit within the wireless communication unit - then keeps the private key secret and thus maintains the security of the software distribution concept suggested with present invention.

The concept of present invention is paramount to known security mechanisms for securing software or other digital goods, in particular those known under the term digital rights management (DRM), as it is simple and flexible and does not require a massive overhead. Furthermore the result of the installation is not impacted by the security mechanism required only for the way from the originator of the software element to the runtime environment. Finally the concept works in parallel with common software distribution mechanisms that do not require such security means.

According to the second aspect of the invention it is proposed a wireless communication unit configured to operate within a wireless network, the wireless communication unit comprising a runtime engine, an external interface, a first memory unit and a second memory unit, the second memory unit being restricted from external access, wherein the wireless communication unit is configured to:
- receive an encrypted software element from an external appliance connected through the external interface,
- after reception of the encrypted software element, store the encrypted software element to the first memory unit,
   for installation of the software element from the first memory unit to second memory unit, the wireless communication unit is configured to:
- decrypt the encrypted software element, and
- store the decrypted software element to second memory unit,
   the wireless communication unit is further configured to:
- run installed software element from second memory unit by means of the runtime engine.

The second aspect shares the advantages of the first aspect.

According to a third aspect of the invention it is proposed a system comprising a wireless communication unit according to the second aspect of the invention and an external appliance, communicatively coupled by means of the external interface of the wireless communication unit, wherein the external appliance comprises a third memory unit, the external appliance being configured to:
- download a encrypted software element from an external server by means of the wireless communication unit,
- store downloaded encrypted software element to third memory unit,
- provide encrypted software element to wireless communication unit by means of the external interface of the wireless communication unit.

The third aspect is advantageous for retrieving software elements from remote servers as set out above. The system in particular is a wireless communication device, which in its entirety is set in the position to securely download and install software elements running in the wireless communication unit.

As it is shown this invention advantageously solves the depicted problem and hence allows installing software elements on a wireless communication unit in a secure and flexible way.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1: represents a device of the type to which the present invention is applied as an embodiment;
- Figure 2: represents a diagram showing the flow of data in the device according to embodiments of present invention
- Figure 3: shows a flow diagram according to a preferred embodiment of present invention

The same elements have been designated with the same reference numerals in the different drawings. For clarity, only those elements and steps which are useful to the understanding of the present invention have been shown in the drawings and will be described. Moreover, when an action is said to be performed by a device or unit, it is in fact executed by a microprocessor in this device controlled by instruction codes recorded in a program memory on the said device. That terminology is consistent with the manner in which computer scientists refer to the operation of pieces of computer equipment executing pieces of computer software. Of course, when it is stated that a piece of software performs an action, what is intended is that the software contains the instructions that cause the corresponding hardware to perform that action, and, conversely, when it is stated that a piece of hardware performs an action, it is meant that the hardware performs the action as directed by the corresponding software.

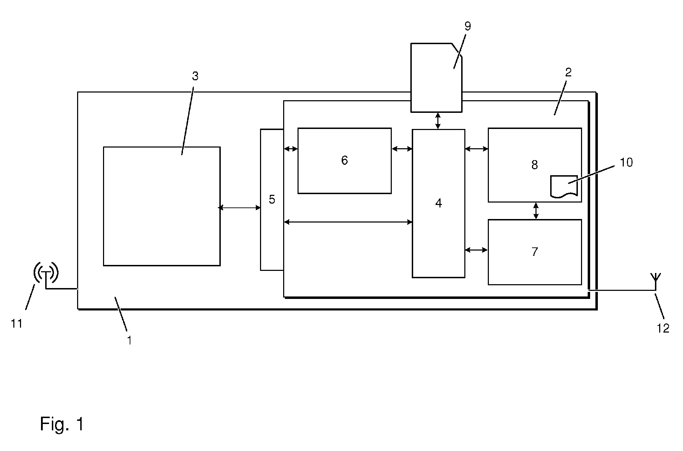

FIG. 1 shows the structure of a wireless communication device 1 incorporating a wireless communication unit 2 according to a preferred embodiment of present invention. The wireless communication unit 2 comprises a control unit 4 which controls all relevant operations of the wireless communication unit 2, in particular the access to the first memory unit 6 and the access to the second memory unit 8. The control unit 4 is in particular configured to carry out communication tasks with wireless networks, by means of antenna 12.

The wireless communication unit 2 further comprises a runtime engine 7. This runtime engine 7 is configured to execute, alone or in conjunction with the control unit 4, at least one software element 10 that is stored in the second memory unit 8. With the execution of the software element 10 it is in particular foreseen to conduct procedures that are related to wireless communication with wireless networks to other wireless communication devices or remote servers. Such a remote server is in one advantageous embodiment a server which retrieves through the wireless communication unit regular measurements from sensors 11, which are communicatively coupled - wired or wirelessly - to the wireless communication device 1. The sending of said measurements is in particular controlled by the software element 10, in particular in terms of time trigger, error handling and/or logging.

The wireless communication unit 2 further is communicatively coupled to a secured operation unit 9. This is in particular a unit which comprises a secured memory comprising keys and/or access credentials for enabling the wireless communication unit 2 to work in the wireless network. The secured operation unit 9 is in a preferred embodiment a secure element, in another preferred element the secured operation unit 9 is a universal integrated circuit card (UICC), in particular comprising a secure element. The access to the secured memory of the secured operation unit 9 is in particular protected through cryptographic methods, e.g. secured by a PIN. The secured operation unit 9 further advantageously comprises means for executing in a secured environment software code, in particular applications preferably comprising operations for decrypting data by means of a private decryption key stored in the secured memory of the secured operation unit 9.

The wireless communication device 1 acts as external appliance from the perspective of the wireless communication unit 2, and as such is communicatively coupled to the wireless communication unit 2 by means of the external interface 5. This external interface 5 is in particular a serial interface controlled by modem commands, in particular AT commands according to the Hayes commands set. The wireless communication device 1 further comprises a third memory unit 3, which is outside of the wireless communication unit 2, and allows storing data retrieved either by a local in particular wired connection, e.g. through a USB or serial port, or by a wireless communication process from a remote server by means of the wireless communication unit 2, which acts as a modem for the wireless communication device 1.

As one typical example of a wireless communication device 1, sensor 11 is an alarm sensor. This alarm sensor is indicating an alarm message to the wireless communication unit 1. The wireless communication unit 1 in response sends through the external interface 5 an alarm request to the wireless communication unit 2. In the wireless communication unit 2 the control unit 4 is configured to delegate alarm requests to the software element 10 stored in the second memory unit 8 and executed by the runtime engine 7. The software element 10 receives the alarm message and is enabled to send a signed alarm message to a remote server. With that signed alarm message the remote server knows that this is no false alarm, but one from a certified customer and trigger appropriate means.

If during installation of the software element 10 in the wireless communication unit 1 the contained signature certificate would have become freely available, this certification process would become unreliable.

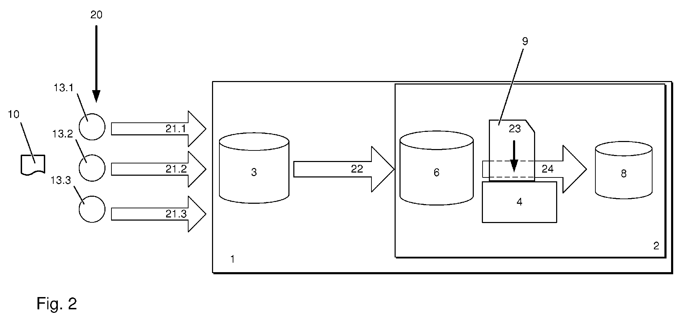

FIG. 2 shows a data flow according to an embodiment of present invention through the wireless communication device shown in FIG. 1. The wireless communication device 1 is according to that embodiment configured to receive a software element 10 through at least one of various ways. It is either provided by a physically available hardware memory 13.1 like a flash memory via USB or in a SD card slot. Alternatively it is provided by wirelessly downloading the software element 10 from a remote server 13.2 by means of the wireless communication unit 2. Finally it is provided from a remote server 13.3, by means of another communication technology, in particular by a wired connected. Before the software element is made available for the wireless communication unit, it is first encrypted with an encryption key 20. This encryption is happening at the remote server 13.2, 13.3 or the device that copies the data on the hardware memory 13.1. The encryption is in a preferred embodiment happening with the public key of an asymmetric key pair.

Through one of the interfaces 21.1, assigned for hardware memory, 21.2, for wireless downloading or 21.3 for wired downloading, the encrypted software element 10 is provided to the wireless communication device 1, and stored in the third memory unit 3.

The software element 10 is now stored in the wireless communication device 1 on a memory which is accessible from the outside. But still the software element is provided in encrypted form. Thus, it is not possible for an intruder to access the content of the software element.

By means of interface 22, which is preferably a serial or USB interface between the wireless communication unit 2 and the wireless communication device 1, the encrypted software element 10 is provided from the third memory unit 3 to the first memory unit 6 within the wireless communication unit 2. The first memory unit 6 allows access in terms of uploading data from an external appliance like the wireless communication device 1, which is in detail preferably a submission of data to the control unit 4 or an interface unit within the wireless communication unit 2, which then decided to write data to the first memory unit 6.

It is then, by means of an internal interface 24, which is preferably controlled by the control unit 4, foreseen to install the software element to second memory unit 8. As part of this installation, the software element 10 needs to be decrypted. For that the required decryption key 23, in particular the private key, needs to be stored accessible for the wireless communication unit 2. This is preferably done by the secured operation unit 9, which is in particular a secure element. Within this the decryption key is securely and tamper proofed stored with no possibility to access from the outside. Preferably the secured operation unit 9 provides also the decryption algorithm, which means instead of giving the decryption key 23 to the control unit 4 for decrypting the software element 10, the control unit 4 provides the encrypted software element 10 to the secured operation unit 9 and receives afterwards the software element 10 in decrypted form.

After the decryption is successfully executed the result of the decryption is stored in the second memory unit 8. As the second memory unit 8 is restricted from external access, in particular only accessible by internal units of the wireless communication unit 2, the internal unit, in particular the control unit 4 provides the decrypted software element 10 to second memory unit 8. With that the installation of the software element 10 to second memory unit 8 is fulfilled.

Except the control unit 4, it is now only the runtime engine shown in FIG. 1 which has read access to the second memory unit 8 and is able to execute the installed software element 10.

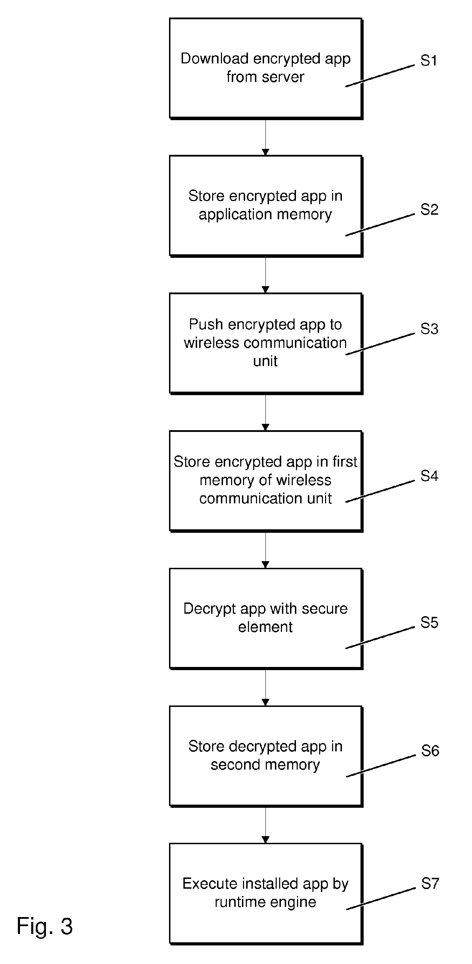

The process according to a preferred embodiment of the invention is shown in a flow chart in FIG. 3. The process starts in this embodiment in step S1 with the download of a software element, in this embodiment as an app. The app is provided in encrypted form. The app is downloaded from a server, which is in particular wirelessly or wired accessible for the wireless communication device 1. After download, the received app is in step S2 stored in the appliance memory, which is the third memory unit 3 of the external appliance.

In step S3 the app is provided through an external interface 5 between the external appliance 1 and the wireless communication unit 2 to the wireless communication unit 2. The wireless communication unit 2 stores in step S4 the received app in its first memory unit 6.

After the wireless communication unit 2 has received and stored the encrypted app in its first memory unit 6, it is in the position to install the app. As part of this installation two steps are foreseen: The decryption (S5) and the storing in the second memory unit 8 (S6). Depending upon the implementation these installation steps are executed together. It is in particular foreseen that the encrypted app consists from more than one encrypted file or part of a file and for each encrypted file the decryption and storing is completed before the next encrypted file is installed. Further the storing is foreseen to consist not only from a copying of the encrypted file to the second memory unit 8, but additionally in second memory unit 8 further file handling steps are executed. The steps are in particular executed by the control unit 4, whereby for the step of decryption the control unit 4 gets assistance by the secured operation unit 9, that means the control unit 4 provides the secured operation unit 9 with the encrypted app and receives it in decrypted form in order to store it in the second memory unit 8. In an alternative implementation the memory of the secured operation unit 9 is acting as second memory unit 8. In this embodiment the installation is done by providing the encrypted app to the secured operation unit, which than carries out the decryption and the storing of the app. The secured operation unit 9 then additionally provides an interface to the runtime engine 7 and the control unit 4 that allows execution the installed app from the secured operation unit.

As a result of the installation the app is stored that way in the second memory unit 8 that it is able to be executed by means of the runtime engine 7 in step S7. Besides the runtime engine the control unit 4 also has access to the installed app, in particular in order to modify or remove it from the second memory unit 8.

After successful installation the wireless communication unit is ready to process received requests like the alarm request described above, such request are internally handled by the installed app, which consequently provides instructions via the runtime engine to the control unit 4 to conduct communication tasks with the wireless network and a remote server.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method to operate a wireless communication unit (2),
the wireless communication unit (2) being configured to operate within a wireless network,
the wireless communication unit (2) comprising a runtime engine (7), an external interface (5), a first memory unit (6) and a second memory unit (8), the second memory unit (8) being restricted from external access,
the method comprising the steps of:
- receiving at the wireless communication unit (2) an encrypted software element (10) from an external appliance (1) connected through the external interface (5),
- after receiving the encrypted software element (10), storing the encrypted software element (10) to the first memory unit (6),
- installing the encrypted software element (10) from first memory unit (6) to second memory unit (8), the step of installing comprises:
- decrypting the encrypted software element (10), and
- storing the decrypted software element (10) to second memory unit (8),
the method further comprising the step:
- running installed software element (10) from second memory unit (8) by means of the runtime engine (7).

2. Method according to claim 1,
wherein access to second memory unit (8) is restricted to units internal to the wireless communication unit (2).

3. Method according to claim 2,
the wireless communication unit (2) further comprising at least one control unit (4), wherein the second memory unit (8) is only accessible for the control unit (4) and the runtime engine (7).

4. Method according to at least one of the previous claims,
the wireless communication unit (2) further comprising a secured operation unit (9) comprising memory means for storing a decryption key (23).

5. Method according to claim 4,
wherein the step of decrypting is executed by means of the secured operation unit (9) with the stored decryption key (23).

6. Method according to claim 5,
wherein the second memory unit (8) is comprised in said secured operation unit (9),
and the step of storing the decrypted software element (10) is executed by said secured operation unit (9).

7. Method according to at least one of the previous claims,
wherein the software element (10) is encrypted with a public key (20) different from the decryption key (23).

8. Method according to at least one of the previous claims,
wherein the external appliance (1) comprises a third memory unit 3,
the method comprising the steps for the external appliance (1):
- downloading encrypted software element (10) from external server by means of wireless communication unit (2),
- storing downloaded encrypted software element (10) to third memory unit 3,
- providing encrypted software element (10) to wireless communication unit (2) by means of external interface (5) of the wireless communication unit (2).

9. Wireless communication unit (2) configured to operate within a wireless network,
the wireless communication unit (2) comprising a runtime engine (7), an external interface (5), a first memory unit (6) and a second memory unit (8), the second memory unit (8) being restricted from external access,
wherein the wireless communication unit (2) is configured to:
- receive an encrypted software element (10) from an external appliance (1) connected through the external interface (5),
- after reception of the encrypted software element (10), store the encrypted software element (10) to the first memory unit (6),
for installation of the software element (10) from the first memory unit (6) to second memory unit (8), the wireless communication unit (2) is configured to:
- decrypt the encrypted software element (10), and
- store the decrypted software element (10) to second memory unit (8), the wireless communication unit (2) is further configured to:
- run installed software element (10) from second memory unit (8) by means of the runtime engine (7).

10. Wireless communication unit (2), according to claim 9,
wherein the access to second memory unit (8) is restricted to units internal to the wireless communication unit (2).

11. Wireless communication unit (2), according to claim 10,
further comprising at least one control unit (4),
wherein the second memory unit (8) is only accessible for the control unit (4) and the runtime unit (7).

12. Wireless communication unit (2), according to at least one of the claims 9 to 11,
further comprising a secured operation unit (9) comprising memory means for storing a decryption key (23),
the secured operation unit (9) is configured to conduct the step of decryption with the decryption key (23).

13. Wireless communication unit (2), according to claim 12,
the secured operation unit (9) further comprising the second memory unit (8), and the secured operation unit (9) is configured to execute the step of storing the decrypted software element (10).

14. Wireless communication unit (2), according to at least one of the claims 9 to 13,
wherein the software element (10) is encrypted with a public key (20) different from the decryption key (23).

15. System comprising a wireless communication unit (2) according to claim 9 and an external appliance (1), communicatively coupled by means of the external interface (5) of the wireless communication unit (2),
wherein the external appliance (1) comprises a third memory unit (3),
the external appliance (1) being configured to:
- download an encrypted software element (20) from an external server by means of the wireless communication unit (2),
- store downloaded encrypted software element (10) to third memory unit (3),
- provide encrypted software element (10) to wireless communication unit (2) by means of the external interface (5) of the wireless communication unit (2).
